Europäisches Patentamt

European Patent Office

Office européen des brevets

(11) Publication number: **0 205 489**

**B1**

(12) **EUROPEAN PATENT SPECIFICATION**

(45) Date of publication of patent specification: **09.05.90**

(51) Int. Cl.⁵: **B 32 B 3/06, B 29 C 67/00**

(21) Application number: **85906121.0**

(22) Date of filing: **20.11.85**

(86) International application number:
**PCT/US85/02290**

(87) International publication number:
**WO 86/03164 05.06.86 Gazette 86/12**

(54) **SEPARABLE FASTENERS AS WELL AS METHOD AND APPARATUS FOR ADAPTING SEPARABLE FASTENERS FOR ATTACHMENT TO OTHER OBJECTS.**

(30) Priority: **20.11.84 US 673445**
**17.07.85 US 756005**

(43) Date of publication of application:
**30.12.86 Bulletin 86/52**

(45) Publication of the grant of the patent:
**09.05.90 Bulletin 90/19**

(84) Designated Contracting States:
**AT BE CH DE FR GB IT LI LU NL SE**

(56) References cited:
**EP-A-0 138 724**
**EP-A-0 145 603**
**EP-A-0 168 241**
**BE-A- 900 878**
**FR-A-1 533 977**
**FR-A-2 258 143**
**FR-A-2 423 666**
**FR-A-2 556 271**
**US-A-3 607 569**
**US-A-4 470 857**

(73) Proprietor: **VELCRO INDUSTRIES B.V.**
**Hoekenrode 6**
**NL-1102 BR Amsterdam (NL)**

(72) Inventor: **PROVOST, George, A.**
**764- Brook Road RFD 3**
**Manchester, NH 01308 (US)**
Inventor: **ROSA, Edmund**
**142 Starr Avenue**
**Lowell, MA 01852 (US)**
Inventor: **KOPPEL, Donald, L.**
**82 1/2 Pleasant Street**
**Concord, NH 03301 (US)**
Inventor: **ROCHA, Gerald, F.**
**106 Beacon Street**
**Lowel, MA 01850 (US)**
Inventor: **HATCH, Richard, N.**
**44 South Main Street**
**Hooksett, NH 03106 (US)**

(74) Representative: **Sommerville, John Henry et al**
**SOMMERVILLE & RUSHTON 11 Holywell Hill**
**St. Albans Hertfordshire, AL1 1EZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the invention

#### 1. Field of the invention

This invention relates to separable fasteners of the hook and loop-type as well as to an apparatus and method for adapting said separable fasteners for attachment to other objects, particularly such objects as polyurethane foam seat cushions for automobiles, furniture or the like. The resultant unique adapted fastener, which is manufactured on the apparatus of the invention, simplifies attachment of objects to other objects or members, as well as attachment of other objects or members to the main object.

#### 2. Description of the prior art

Hook and loop fasteners are well known and are used to join two parts detachably to each other. These fastener strips consist of mating fastener tapes having hooks and loops respectively on either tape, which on being pressed together will interlock and so form a connection. Such fastener strips are employed where ease of connection and disconnection is desired or where an infinite adjustability within a circumscribed range is desired.

More particularly, document FR—A—2 423 666 discloses a separable fastener assembly of hook- or loop-type which comprises:

a separable fastener member having a plurality of hook-type or loop-type engaging elements upstanding from one surface, and

a substrate member positioned in engagement with the surface opposite said engaging elements and attached to said fastener member.

Although originally having their primary use in wearing apparel, separable fasteners have expanded significantly in use. However, the areas of expansion have been limited by some of the properties of such separable fasteners as now produced. For example, attaching the fasteners to other items has sometimes been difficult which difficulty may limit their use. A known method of attaching these fasteners to a multitude of members has been to stitch the fasteners to the item. Such stitching procedure however is sometimes laborious, and is not always available for attachment to bulky items. In particular wider strips are advantageous for attachment to objects having surface delamination problems. Bonding or adhesively securing the fastener to other items requires pressing the areas to be joined together for substantial lengths of time to permit curing of the bonding agent. In addition, when pressing the active areas of the fasteners against the substrate member the hooks and/or loops of the fastener strips are sometimes so deformed and crushed that the tapes no longer function satisfactorily and the repeated fastening is no longer assured. Further, adhesive attachment requires adhesive compatibility between the fastener, the adhesive and between the adhesive and the object to which it will be attached.

For attachment of the fasteners to other objects such as polyurethane foam seat cushions for automobiles or the like, fastening of the tapes has been difficult due to the lack of suitable adhesives or fastening techniques. In fact, in the case of seat cushions, such fasteners would make it possible to separably attach seat covers or the like. Further, attachment of the fasteners to other known objects would facilitate attachment and detachment of known functioning items or appurtenances which would not otherwise be possible.

We have invented a method and apparatus for adapting such separable fasteners for attachment to known objects either by known adhesives or by attachment to plastic foam objects during the actual molding the objects, while avoiding the disadvantages of the prior art.

### Summary of the invention

This invention relates to a separable fastener assembly as well as to a method and apparatus for adapting a separable fastener. When directed to a separable fastener assembly, the invention relates to an assembly as disclosed in FR—A—2 423 666 and exhibiting the features listed in the characterising portion of claim 1. Furthermore, the invention relates to an apparatus for adapting a separable fastener as claimed in claim 6, to a method for making a foam article incorporating a fastener assembly as claimed in claim 10, and to a product comprising a first article and a second article separably secured together by a separable fastener assembly, as claimed in claim 12. Preferred embodiments are given in the dependent claims. Moreover, the invention relates to adapting a separable fastener of the hook and loop-type by ultrasonically attaching a substrate to it. By attaching a substrate member to the side of the separable fastener opposite the side having a plurality of engaging elements upstanding from the surface, the fastener is adapted for easy fastening using more conventional means than presently in use. In one embodiment the substrate member is a liquid absorbant material.

The adapted fastener may be attached to a variety of objects. The fastener may be attached to polyurethane foam objects for automobile seats, furniture seats, etc. using a variety of attachment techniques. For example the fastener may be attached by using adhesives. The adhesive can be polyurethane, adhesive cement, epoxy, hydraulic cement synthetic rubber based adhesives such as nitrile rubber base adhesive or almost any known adhesive. The separable fastener tape itself may be either woven, molded, knitted or non-woven and may be made of any of the substances used to make the tape such as nylon or polyester.

One of the unique features of the adapted fastener is its compatibility with attaching techniques using polyurethane. The polyurethane could be used as many other adhesives are used by positioning it between the fastener substrate and the object and then allowing the polyurethane to cure. A second method of attachment using polyurethane could be performed by using the polyurethane to form a section of the object while simultaneously providing the adhesive bond. To accomplish this objective, a trough or groove is either formed or cut into the object. The fastener is then placed into position and polyurethane is used to fill the trough or form a part of the object to which the fastener is to be attached. When the polyurethane sets it provides the bond for the fastener.

The method of using polyurethane according to the invention is to actually attach the adapted fastener into a polyurethane object during the formation of the object. This is accomplished by using a mold with a special trough or section for holding the adapted fastener and protecting its elements during the forming process. The mold is then filled with forming components that undergo polymerization and fill and surround the substrate either by an absorption process or a soaking process, depending upon the substrate material. When the molding operation is complete, a polyurethane object is formed having a separable fastener member integrally molded to it. Other synthetic resins such as polystyrene or polyvinyl chloride may also be used in place of polyurethane.

The method of the invention is particularly useful in the formation of seat cushions for use in furniture or automobiles. After the fastener is attached or molded to the object, a cover may then be attached either by use of a corresponding surface of mating elements or by the plurality of filaments that are present in many fabric or foam backed covers. In this manner a seat cushion with an easily attached cover is produced. These same methods may be used to attach other objects to the object with the adapted fastener attached.

The apparatus of the invention is made up of a series of subcomponents positioned at sequential stations. Each station performs operations that may be added or eliminated, depending upon the desired form and properties of the final desired adapted fastener product. Initially the apparatus should have at least one ultrasonic attaching station. Means are provided for movably supporting the fastener tape and substrate while holding them in the proper relative positions. The tape and substrate then pass through a station with means for continuously ultrasonically attaching the fastener to the substrate.

The ultrasonic attachment is performed by ultrasonic stitching. The ultrasonic stitching machine produces a continuous series of interrupted "melt" or "weld" spots along the length of the tape and substrate.

It may be desired to cut the tape to predetermined lengths and to provide finished ends at the cut. This is accomplished by using a second ultrasonic station which crushes, melts and welds a small portion of the fastener elements. This is done at predetermined locations along the tape length. The resultant flat area provides a mark to provide physical indication as to where the tape is to be cut, while at the same time providing finished ends for the portions thus cut.

It is desired in some applications to provide an adhesive layer to either the margins of the substrate, or to the back of the substrate, or both. For example the adhesive layer may be placed on the margin in order to hold the fastener in a mold-in operation. This adhesive may also be used to attach a flexible protective member to the fastener in order to protect the adhesive and hooking elements prior to use of the adapted fastener.

If the adapted fastener strip is to be extensive in length, the tape may be rolled up onto rollers with the flexible member protecting the tape elements so they don't adhere to the substrate of the next roll layer. A sensor or other indicator means for detecting the flattened area created by the second ultrasound station may be used which then provides for cutting the tape in the flattened area. Again, the tape may have the flexible protective member for shipping.

It should be appreciated that these stations may be used in a plurality of different combinations to provide a final tape in a desired form.

Alternatively, the method could use an attaching step which comprises the steps of applying an adhesive material to the second member, and positioning the separable fastener member against the adhesive material such that upon curing or drying of the adhesive material, the separable fastener member becomes adhesively attached to the second member. In this case the adhesive may be a hot-melt adhesive. When the hot-melt adhesive is used the method may further include subsequently directing the separable fastener member and subsequently directing the separable fastener member and second member through a cooling zone to shorten the setting time of the hot melt adhesive.

A second alternative could be the use of solvent based adhesives in which instance the separable fastener member, and second member may be directed through solvent removing means, to thereby shorten the setting time of the adhesive disposed therebetween.

In any event the method also includes disposing a metal strip between the separable fastener member and second member so as to render them magnetically attractive. Once adapted the separable fastener may be attached to a synthetic foam member.

A preferred embodiment of the method of the invention may be used to produce a foam plastic article with a separable fastener attached thereto by taking a separable fastener member having a plurality of hook-type or loop-type engaging elements upstanding from one surface; attaching the separable fastener member to a second member positioned in back to back relation with the surface of the fastener member opposite the surface having engaging elements. The second member has a plurality of elements in the form of monofilament loops upstanding from the opposite surface, which elements are capable of being surrounded and encapsulated by a material forming at least a part of the article. This is followed by the steps of placing the assembly of the separable fastener member and second member into a trough of a mold unit such that the elements extend into the inner space of the mold; filling the mold with plastic foam forming components in liquid form; allowing the forming components to surround and encapsulate the elements without the elements interfering with the free escape of excess gas from the space surrounding the elements; and, allowing said foam forming materials to cure, dry or set while encapsulating the elements thereby creating a foam plastic article with said separable fastener attached thereto with its upstanding engaging elements extending away from the surface of the article. The article may be modified by positioning a protective cover over the engaging elements to protect them from contamination by the foam forming components. A further step may include heating the foam plastic article thus formed to thereby cure the plastic foam material.

When the heat curing step is used, the protective covering may advantageously be a polyethylene layer which melts and disintegrates when subject to the heat of curing of the foam plastic material.

The invention also includes the adapted separable fastener for attachment to a foam plastic article comprising a separable fastener member of the hook and loop-type; a second member attached to the separable fastener member in back to back relation on the side of the separable fastener member opposite the side having the engaging elements; and a plurality of elements extending from the second member which are capable of being surrounded and encapsulated by plastic foam forming components while permitting the free escape of gas by-products produced by polymerization of the components thereby permitting attachment of said separable fastener member and said second member to the finished foam article. The plurality of elements may comprise spaced upstanding loop-like elements extending from the surface of the second member opposite the surface attached to said separable fastener member.

The monofilament loops of the second member are preferably about 0.3175 cm (one-eight inch) to 0.9525 cm (three-eighths inch) in height. In one embodiment the second member and elements are hook-type separable fastener members. Also, a metal strip is preferably disposed between the separable fastener member and the second member so as to render the adapted fastener magnetically attractive for secure positioning within a forming mold supplied with heavy duty magnets in predetermined locations.

The preferred method for attaching a separable fastener of the further embodiment to a foam plastic object comprises, taking a separable fastener member having a plurality of hook-type or loop-type engaging elements upstanding from one surface; positioning a metal strip in back to back relation with the surface of the fastener member opposite the surface having engaging elements; and adapting the separable fastener member for attachment to the foam plastic article by attaching the separable fastener member to a second member positioned in back to back relation with the surface of the fastener member opposite the surface having engaging elements interposing—or sandwiching—the metal strip therebetween. The second member has a plurality of elements upstanding from the opposite surface which are capable of being surrounded and encapsulated by a material forming at least part of said object. Further steps include positioning the adapted separable fastener member in a trough of a mold unit which trough has magnetic means to maintain the adapted fastener in position in the trough by magnetic attraction to said metal strip, the adapted fastener being positioned such that the elements extend into the inner space defined by the mold; introducing foam forming components in liquid form into said mold so as to permit the components to flow into and around said plurality of upstanding elements; allowing the foam forming components to surround and encapsulate the elements while undergoing polymerization and permitting free venting of excess gases formed by the polymerization process.

This method may advantageously include attaching a plastic protective covering to the assembly, prior to placing the assembly in the trough, in a position covering the engaging elements of the separable fastener so as to protect same from contamination by foam forming components.

The method may further include placing the object in a curing oven after molding in order to cure the foam and melt away the plastic protective covering.

Detailed description of the drawings

Fig. 1 is an elevational view of the apparatus of the invention for practicing the inventive method of adapting a hook and loop-type separable fastener member for attachment to another object.

Fig. 2 is a view of the ultrasonic stitching apparatus of one embodiment of the apparatus taken along lines 2—2 of Fig. 1.

Fig. 3 is a cross-sectional view of the completed adapted fastener of the invention showing a separable fastener tape of molded plastic construction, a backing, a substrate, and a protective liner.

Fig. 4 is a cross-sectional view of the completed adapted fastener of the invention taken along lines 4—4 of Fig. 3.

Fig. 4A is a partial cross-sectional view of an alternate form of hook-type separable fastener tape of woven construction.

Fig. 4B is a partial cross-sectional view of the adapted fastener of the invention incorporating an alternate form of hook-type separable fastener tapes having hooking elements having a mushroom configuration.

Fig. 4C is a partial cross-sectional view of the adapted fastener of the invention incorporating an absorbent substrate backing member.

Fig. 5 is a perspective view of an adapted separable fastener and a polyurethane foam forming mold with trough for receiving and holding the adapted fastener during the molding process for molding an automobile seat cushion.

Fig. 6 is an enlarged view, partially broken away, of the ultrasonic horn and anvil showing the ultrasonic stitching process of one embodiment of the invention.

Fig. 7 is a side elevational view of the second ultrasonic horn of one embodiment of the invention.

Fig. 8 shows the adapted separable fastener used to hold automobile upholstery onto a polyurethane seat cushion after the adapted fastener is secured by the molding process to the foam material of the seat cushion.

Fig. 9 is a cross-sectional view taken along lines 9—9 of Fig. 9 illustrating the attachment interface between the adapted fastener and the seat cushion of Fig. 8.

Description of the preferred embodiments

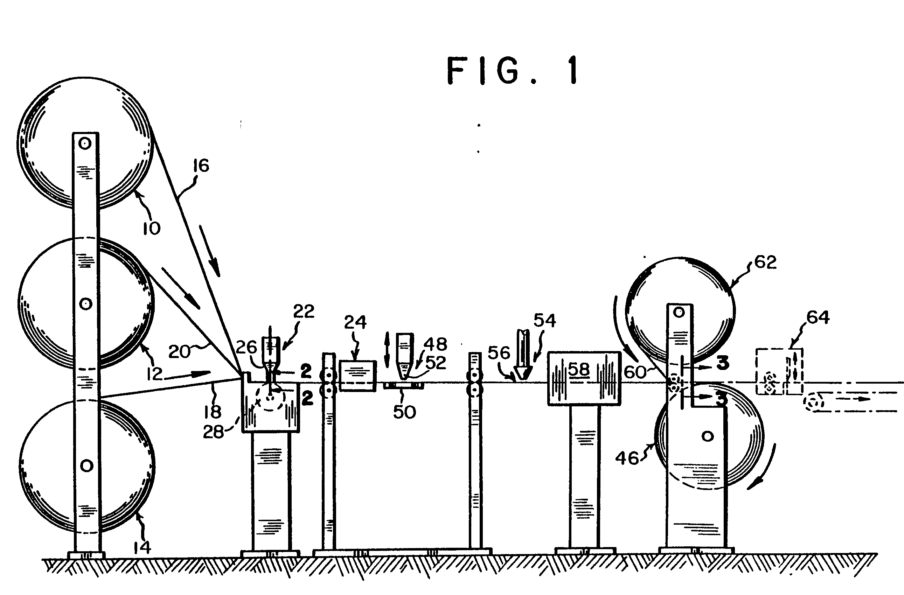

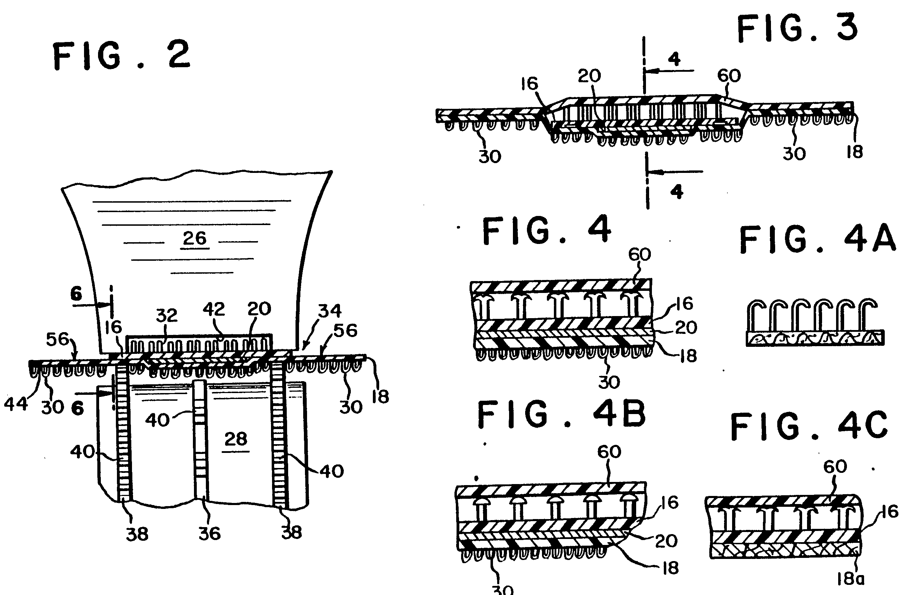

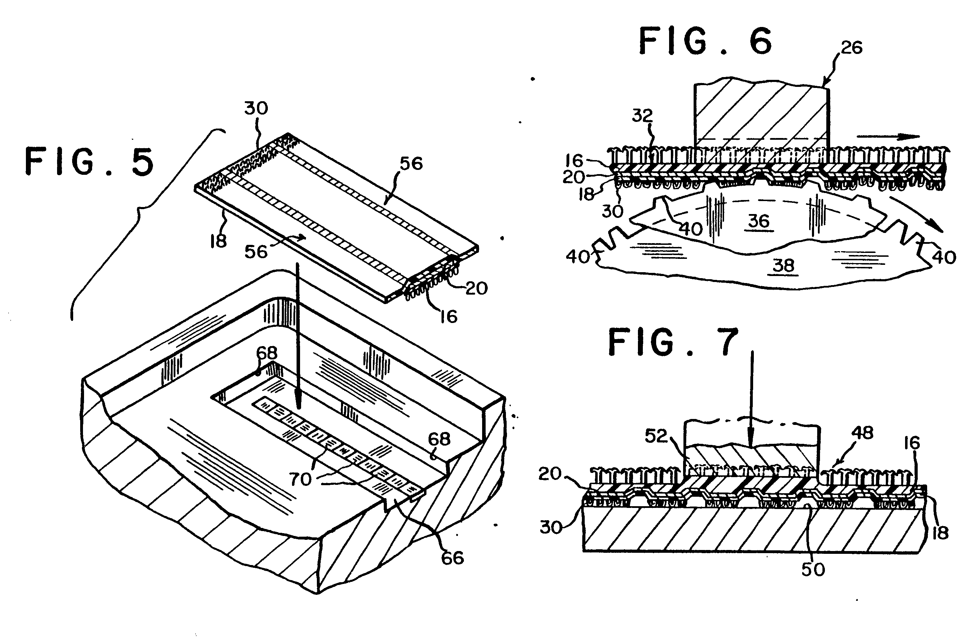

The apparatus used for adapting the separable fastener member is shown overall in Fig. 1 with further details illustrated in Figs. 2 and 6. The apparatus shown in Fig. 1 is comprised of feeder rolls 10, 14 and 12 which feed the strips of hook tape 16, substrate 18 and metal strip 20 to the attaching unit 22. The attaching unit 22 may take a number of forms but is preferably a continuous ultrasonic stitching machine. For example, it may also be an adhesive applicator in conjunction with pressure rollers and a setting (or curing) station 24. The adhesive may be a hot melt adhesive in which case the setting station would be a refrigeration unit. Alternatively the adhesive may be liquid, either water or solvent based, in which instance the setting station would be a solvent removing means such as an oven. The preferred attaching unit is shown as an ultrasonic stitching device which ultrasonically stitches the members together. This type of unit is comprised of a horn 26 and anvil 28. The hook tape 16 may be molded or woven but is preferably molded for automobile seat cushion applications as will be described below. The molded hook tape is preferably of nylon and the substrate 18 may be of an absorbent material such as a non-woven material but may be of woven construction and preferably of a material which is ultrasonically compatible with the hook tape. According to the invention the substrate 18 has a plurality of monofilament loop elements 30 upstanding from one surface as shown in Fig. 3.

In the preferred embodiment, the hook tape 16 of the type disclosed in U.S. Patent Nos. 3,708,833 to Ribich et al and 3,762,000 to Menzin et al., molded tape 16 is fed into ultrasonic stitching machine 34 with the hook side 32 facing upward that is, toward the top of Fig. 1. The ultrasonic stitching machine 34 is comprised of two major parts, the horn 26 and the anvil 28 which includes a central sprocket-like portion 36 and two outside stitching lands 38. The outside lands 38 are operative for part of the actual stitching process while the center sprocket 36 acts to feed and center the substrate material. The two outside lands are spaced in such a manner that they ride just inside the edges of the separable fastener tape, that is, the width of their separation is determined by the width of the separable fastener to be adapted.

The two outside lands 38 have a shape similar to a sprocket, but on a smaller scale than the central sprocket-like portion 36. They each have a series of tooth-like projections 40 spaced approximately 0.0793 cm (1/32 of an inch) apart along the circumference of each land. In one embodiment, each projection is approximately 0.4762 cm (3/16 of an inch) in length as measured in the direction of the circumference, 0.3175 cm (1/8 of an inch) in width and of suitable height sufficient to permit the horn to apply pressure to the tape when the tape is supported on the lands. Each projection supports the members to be attached and has a small groove on its peak surface running in a direction transverse to the length of the tape. One function of this groove is to provide relief for the softened material.

The desired substrate 18 moves toward, and is mated in back-to-back engagement with the separable fastener tape 16 to be adapted. In the preferred embodiment a strip of metal 20 is disposed between the separable fastener tape 16 and the substrate 18. The metal strip 20 adds a magnetically attractive property to the fastener for purpose which will be described below. The separable fastener tape 16 and metal strip 20 are fed onto the substrate 18 by rollers 10 and 12. The separable fastener tape 16, the metal strip 20 and the substrate 18 are held in their relative positions and orientation as they pass between the anvil 28 and the ultrasonic horn 26. The ultrasonic horn 26 is positioned against the hook-tape 16 as indicated in Figs. 1, 2, and 6, that is, the ultrasonic horn 26 moves toward the anvil 28 while applying ultrasonic energy to the components as they pass between the horn and the anvil. The ultrasonic horn is positioned such that as each land rotates to its peak position, the fastener and substrate are squeezed between the anvil and horn and are continuously welded together by the ultrasonic energy provided by the horn when the fastener and substrate are supported by the anvil. The center section of the horn has an opening 42 such that the hooking elements of the tape pass through without interference. The motions of the horn 26 and anvil 28 create a continuous series of ultrasonic stitches which appear on the tape as a series of spaced indentations. In one embodiment, each stitch is approximately 0.0794 cm (1/32 of an inch) long (as measured in the lengthwise direction of the tape and spaced about 0.1587 cm (1/16 of an inch) apart). The tape remains intact between each stitch. Thereafter, the resultant product is comprised of a substrate member ultrasonically stitched to the separable fastener tape with the hooks of the tape facing upward and a metal strip disposed therebetween. The substrate is preferably wider than the separable fastener and this leaves a margin of about 0.3175 cm (1/4 inch) of substrate extending beyond the separable fastener on either side.

The structure of substrate member 18 is crucial to the invention to provide gas release and acceptable adhesion without delamination or imperfections in the foam. The substrate member 18 has a plurality of elements 30 upstanding from the surface of a base 44 which is usually of woven construction. The elements are spaced to allow free movement of foam forming components and gases through and around them. In the preferred embodiment, an uncut woven hook-type separable fastener tape is used as the substrate. That is, the usual hook-type tape is produced on a loom. The tape is of the type usually made of a woven nylon base member having monofilament nylon loops extending from one surface which are ultimately cut to form hook-type hooking elements. However, for the present application, when the tape is to be used as a substrate, the loop cutting process is bypassed and the loops remain as loops per se (i.e., uncut hooks). These loops are preferably from approximately 0.3175 cm (1/8 inch) to 0.635 cm (1/4 inch) in height and number approximately thirty-two in a line traversing a 4.445 cm (one and three-quarter inch) width tape. However, depending upon the actual foam-forming components used, and the degree of attachment which is desired, any size and density monofilament loops may be used.

After the separable fastener has been attached to the substrate the adapted fastener can either be rolled up on a spool 46 or cut to desired lengths. Other operations may be performed on the product between the ultrasonic stitching machine 22 and the take up spool 46 to improve or facilitate end use of the product. In Fig. 1 the product exits the ultrasonic stitching machine (or alternate attaching unit) and enters a second ultrasonic machine 48. This station differs from the previous ultrasonic station in that it has a flat anvil surface 50 in place of the rotary anvil at the first station. This second station is only used when strips of predetermined length are desired. The second horn 52 has no space to permit the hooking elements to pass without interference. In operation the tape is measured by measuring means which is usually automatic. When the point on the tape where a cut is to be made has been determined the second horn comes down and ultrasonically flattens a predetermined area of the hooks of the molded tape and at the same time welds them so as to be combined with the tape surface. This provides a broad weld area where a cut can be made at a cutting station 54, which cut will leave two finished ends. The horn 52 is raised above the hooking elements to allow their passing without interference between points to be marked.

The product may also pass under a hot-melt adhesive dispenser 54 which applies adhesive to the margins 56 of the product formed by the substrate extending beyond the width of the fastener. The product and adhesive are passed through a refrigerated area 58 to cool the hot-melt adhesive partially, before applying a thin film of protective polyethylene liner 60 from spool 62; alternatively the liner may be in the form of release paper. The cooling step is necessary for the proper function of the adhesive with the protective liner 60. The liner protects the hooks and adhesive in packaging (i.e. rolling on a reel), the polyethylene liner is used to prevent the foam forming components from contaminating the active hooking elements during the molding process discussed below.

After the adhesive and liner have been applied, the continuous tape is run through a cutting apparatus 64. The cutting apparatus cuts the tape across a point substantially centered in the weld area created by the second ultrasonic horn. In this manner the fastener is completely adapted for use while in continuous form and finally cut to lengths desired leaving finished ends on the product.

Prior to attaching the strip to the final product, if release paper is used as a liner, it is first removed. As shown in Fig. 5, for attaching the adapted fastener to a polyurethane molded object such as an automobile seat cushion, the adapted fastener is placed in a pre-cut trough 48 with walls 50 that extend into the mold. The fastener is placed with the hooks facing into the trough 48 and the substrate 16 exposed to the internal area of the mold. The adhesive on the margins of the substrate in one embodiment secures the fastener to the trough by attaching to the surface 52 of the mold walls 50 adjacent the trough. This holds the fastener in place during the molding process.

Within trough 66 are heavy duty magnets 70. The magnets 70 attract the metal strip 20 towards the bottom of the trough and thus maintain the adapted separable fastener securely in position against the mold during the molding process.

When the mold is filled with polyurethane foam forming components, the foam forming components are absorbed into the non-woven substrate or, in the preferred embodiment, the foam forming materials actually envelop the elements 30 of substrate 18 while simultaneously undergoing polymerization. The foam forming components expand and fill the recess formed by the walls of the mold 70, and form the seat cushion. Unnecessary gaseous by-products of polymerization are readily vented past the monofilament loops of the alternate embodiment, thus facilitating unencumbered polymerization and secure envelopment of, and attachment to, the monofilament loops so that the adapted fastener is firmly secured to the seat cushion when it is removed from the mold. When the forming components finally expand and set, the separable fastener remains securely attached to the seat cushion by virtue of the fact that the foam has been drawn into the interstices of the substrate or, in the alternative embodiment the upstanding loop elements 30 have become encapsulated by the polymerized foam material. Other synthetic resin foam forming components such as polystyrene or polyvinyl chloride may be used in place of polyurethane foam forming components.

The substrate must have upstanding members which are dimensioned for attachment and which are particularly spaced to permit venting of gaseous by-products while eliminating problems of skinning and delamination as was sometimes encountered in prior art attempts. Further, so long as the upstanding members are attachable to the foam material, they may take any form or shape such as, for example, monofilament cut hooks, mushroom elements, or even molded upstanding elements.

As noted, the elements 30 are thus firmly embedded in and encapsulated by the foam. Any foam which is formed from components which may have leaked around the edges of the adapted fastener during the molding process may be brushed away. This is easily accomplished when a polyethylene liner is used, since the polyethylene liner remains intact and since most foam materials will not adhere to polyethylene. The formed object is then directed through a curing oven at about 121°C (250°F) which causes the polyethylene liner to melt and disintegrate, thereby making the separable fastener ready for use.

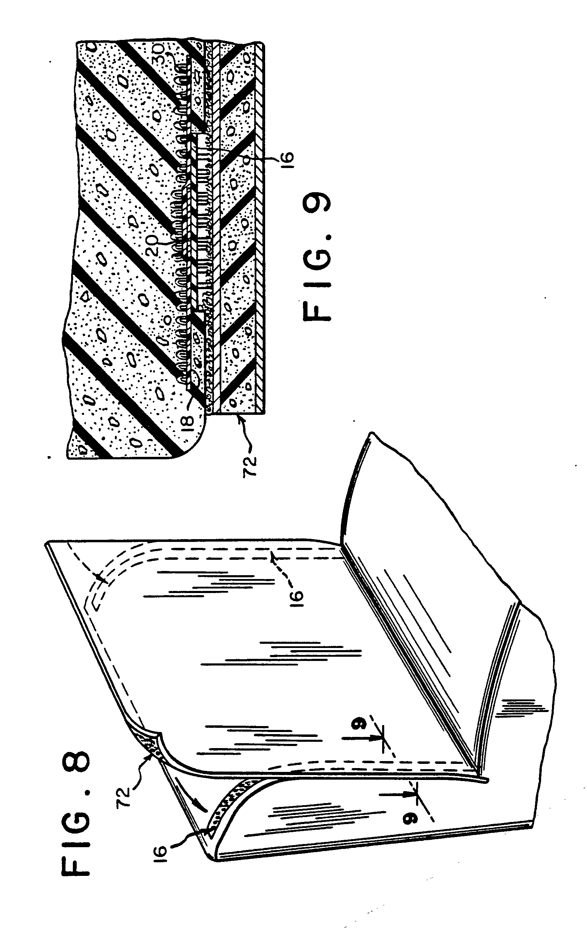

The finished automobile foam seat cushion shown in Fig. 8 illustrates the preferred application of the present invention wherein seat cover material 72 has a napped or fuzzy backing which readily engages and disengages to the foam cushion to provide a readily attachable cover. As noted, the backing of the material 72 may be a loop-type or natural napped fuzzy backing, or alternatively, corresponding mating loop fastener members may be stitched or otherwise secured to the rear surface of the cover material 72. It will be appreciated that the proper alignment of the seat cover material with respect to the foam cushion is readily obtainable by the multiplicity of attachments and relative positions available through the use of the adapted separable fastener of the invention. Further, it can be appreciated that the adapted separable fastener of the invention can be utilized for a multitude of applications in which attachment can be made to other settable or curable materials, including such materials as adhesives, cement or the like.

By way of further example it is also possible to attach the adapted fastener to any object such as a concrete or cement block wall and to thereafter attach objects such as wall panelling adapted to be separably fastened to the adapted fastener strips.

Fig. 4 illustrates the adapted fastener in which a molded hook-tape is used as the fastener having upstanding hooks or spear-like members molded integrally with the base. Fig. 4A illustrates an alternate form of hook tape namely the woven type nylon or polyester hook tape having upstanding monofilament hooks interwoven first as loops with the base and thereafter cut to form hooks. This form may also be of knitted construction. Fig. 4B illustrates the use of mushroom tape being either of woven or knitted construction and having upstanding mushroom like members which are formed either by heat or other deforming techniques. Fig. 4B illustrates the alternate embodiment of the invention, namely the use of molded hook tape 16 and non-woven absorbent substrate 18a formed preferably of polyester fibrous material. Other alternate forms of hook tapes and substrates may be used to practice the invention and such tapes may be formed by a multitude of fabricating techniques. It is important, however, that the members utilized satisfy the above-noted parameters and that they are ultrasonically compatible with each other and with the foam or other material to which the adapted fastener is to be attached.

Although the invention has been described using a small number of embodiments it is to be understood that these are given as illustrations. For example loop-type hooking elements may be used in place of hook-type elements, or a metallic strip interposed between the fastener tape and the liquid absorbent material may be used in conjunction with magnets in a mold in place of the liquid adhesive means. By way of further example it is also possible to attach the adapted fastener to any object such as a concrete or cement block wall and to thereafter attach objects such as wall panelling adapted to be separably fastened to the adapted fastener strips.

## Claims

1. A separable fastener assembly of hook- or loop-type which comprises:
a separable fastener member (16) having a plurality of hook-type or loop-type engaging elements upstanding from one surface (32), and
a substrate member (18) positioned in engagement with the surface opposite said engaging elements and attached to said fastener member, characterised in that said substrate member is a base member (18) having a plurality of monofilament loop-type elements (30) upstanding from the surface opposite the surface to which said separable fastener member is attached, said monofilament loop-type elements (30) being capable of becoming encapsulated by foam material formed from liquid foam-forming components.

2. The separable fastener assembly according to Claim 1, further comprising a metallic strip (20) interposed between said fastener member (16) and said substrate member (18), and a thin film (60) covering the surface of said separable fastener member and attached to both of the side margins (56) thereof to cover the said one surface (32).

3. The separable fastener assembly according to Claim 2, wherein said separable fastener member (16) is a plastic molded hook-type member.

4. The separable fastener assembly according to Claim 3, wherein said substrate member (18) is attached to said separable fastener member (16) by continuous ultrasonic stitching.

5. The separable fastener assembly according to Claim 4, wherein said substrate member (18) is of a material absorbent to liquid.

6. Apparatus for adapting a separable fastener member (16) of the type having a plurality of hook- and loop-type hooking elements upstanding from one surface and comprising:

(a) means for movably supporting a substrate member (18), wherein said substrate member is a base member having a plurality of upstanding monofilament loop-type elements (30) capable of becoming encapsulated by foam material formed from liquid foam-forming components,

(b) means for movably supporting and positioning said separable fastener member (16), such that the side opposite the side having the plurality of hooking elements is in continuous face-to-face contact with said substrate member (18), and

(c) means for movably supporting and positioning a metallic strip (20), such that the metallic strip is interposed between said substrate member (18) and said separable fastener member (16), characterised by means (22) for continuously ultrasonically attaching said substrate member and said separable fastener member interposing said metallic strip therebetween.

7. Apparatus according to Claim 6, further comprising:

(a) means for movably supporting and positioning a thin film strip (60), such that the side of said fastener member (16) having the said engaging elements is in continuous face to face contact with said thin film, and

(b) means for continuously attaching said thin film strip (60) to at least one of said fastener member (16) and said substrate member (18).

8. Apparatus according to Claim 6 or Claim 7, wherein said substrate member (18) is of a liquid absorbent material capable of absorbing liquid foam-forming components prior to formation of the foam.

9. Apparatus according to any one of Claims 6 to 8, further comprising means for marking, means (48) for ultrasonically fastening and means (64) for cutting the fastener assembly into predetermined discrete lengths.

10. A method for making a foam article incorporating a fastener assembly whereby the foam article can be separably attached to another article, wherein the said separable fastener assembly comprises a separable fastener member (16) of the type having hook-type or loop-type elements upstanding from one surface, a substrate member (18) positioned in engagement with the surface opposite said hooking elements and attached to said fastener member, and a strip of metal (20) interposed between said fastener member and said substrate member, the method including:

(a) placing and fixing the fastener assembly in a mold for the foam article with the substrate member facing into the mold so as to overlie magnet means (70) installed in the mold, whereby the metallic strip (20) is attracted by the magnet means,

(b) introducing liquid foam-forming material into the mold,

(c) causing the foam-forming material to surround at least the substrate member (18), and

(d) allowing the foam-forming material to set so that the separable fastener assembly is embedded in the resulting foam article,

characterised in that the substrate member (18) being a base member having a plurality of upstanding monofilament loop-like elements (30) capable of becoming encapsulated by the said foam material, in step (a) the said loop-like elements (30) are placed adjacent to a surface of the mold and in step (c) the foam-forming material is allowed to flow in among the loop-like elements (30), so that the latter become encapsulated in the foam to secure the fastener assembly firmly to the foam article.

11. A method according to Claim 10, including the further step of applying, prior to step (a), a thin film over the fastener assembly whereby to cover at least the said fastening elements of the fastener member (16).

12. A product comprising a first article and a second article separably secured together by a separable fastener assembly according to any one of Claims 1 to 5, the first article being a foam body having the fastener assembly embedded therein with the engaging elements upstanding from said one surface (32) exposed on the outside of the foam body, the second article (72) having a backing capable of engaging separably with the said engaging elements, characterised in that the second article (72) is a fabric cover means, the loop-like elements (30) of the fastener assembly being encapsulated in a substantially void-free manner within the foam of the foam body.

**Patentansprüche**

1. Eine auftrennbare Befestiger-Einrichtung vom Haken- oder Ösen-Typ, welche enthält:

ein abtrennbares Befestigerelement (16), welches auf einer Oberfläche (32) eine Vielzahl aufrecht stehender Eingriffselemente vom Haken-Typ oder Ösen-Typ aufweist, und

ein Trägerelement (18), welches mit der den Eingriffselementen gegenüberliegenden Oberfläche in Eingriff gebracht und mit dem Befestigerelement verbunden wird, dadurch gekennzeichnet, daß das Trägerelement ein Basiselement (18) ist, welches eine Vielzahl von einfädigen Elementen (30) vom Ösen-Typ aufweist, welche aufrecht stehen auf der Oberfläche gegenüber der Oberfläche, an welcher das abtrennbare Befestigerelement angebracht ist, wobei die einfädigen Elemente (30) vom Ösen-Typ fähig sind, durch einen aus flüssigen schaumbildenden Komponenten gebildeten Schaumstoff eingeschlossen zu werden.

2. Auftrennbare Befestiger-Einrichtung nach Anspruch 1, welche weiterhin einen Metallstreifen (20) enthält, welcher zwischen das Befestigerelement (16) und das Trägerelement (18) gelegt ist, und einen dünnen Film (60), welcher die Oberfläche des abtrennbaren Befestigerelements bedeckt und an dessen beiden Seitenrändern (56) angebracht ist, um die eine Oberfläche (32) zu bedecken.

3. Auftrennbare Befestiger-Einrichtung nach Anspruch 2, wobei das abtrennbare Befestigerelement (16) ein aus Kunststoff geformtes Element vom Haken-Typ ist.

4. Auftrennbare Befestiger-Einrichtung nach Anspruch 3, wobei das Trägerelement (18) durch kontinuierliches Ultraschall-Heften an dem abtrennbaren Befestigerelement (16) angebracht wird.

5. Auftrennbare Befestiger-Einrichtung nach Anspruch 4, wobei das Trägerelement (18) aus einem für Flüssigkeiten saugfähigen Material besteht.

6. Vorrichtung zum Anpassen eines abtrennbaren Befestigerelements (16) von der Art, daß es eine Vielzahl von Haken-Elementen vom Haken- und Ösen-Typ enthält, welche auf einer Oberfläche aufrecht stehen, enthaltend:

(a) Mittel für bewegliche Halterung eines Trägerelements (18), wobei das Trägerelement ein Basiselement ist mit einer Vielzahl von aufrecht stehenden einfädigen Elementen (30) vom Ösen-Typ, welche fähig sind, durch einen aus flüssigen schaumbildenden Komponenten gebildeten Schaumstoff eingeschlossen zu werden,

(b) Mittel für bewegliche Halterung und Positionierung des abtrennbaren Befestigerelements (16), so daß die Seite gegenüber der Seite mit der Vielzahl von Haken-Elementen in fortgesetztem Kontakt Auge in Auge mit dem Trägerelement (18) ist, und

(c) Mittel für bewegliche Halterung und Positionierung eines Metallstreifens (20), so daß der Metallstreifen zwischen das Trägerelement (18) und das abtrennbare Befestigerelement (16) gelegt wird, gekennzeichnet durch Mittel (22) für kontinuierliches Ultraschall-Heften des Trägerelements und des abtrennbaren Befestigerelements, wobei der Metallstreifen dazwischengelegt wird.

7. Vorrichtung nach Anspruch 6, ferner enthaltend:

(a) Mittel für bewegliche Halterung und Positionierung eines dünnen Filmstreifens (60), so daß die Seite des Befestigerelements (16), welche die Eingriffselemente aufweist, in fortgesetztem Kontakt Auge in Auge mit dem dünnen Film ist, und

(b) Mittel für kontinuierliches Anheften des dünnen Filmstreifens (60) an das Befestigerelement (16), an das Trägerelement (18), oder an beide.

8. Vorrichtung nach Anspruch 6 oder Anspruch 7, wobei das Trägerelement (18) aus einem Flüssigkeiten aufsaugenden Material besteht und fähig ist, flüssige schaumbildende Komponenten vor der Schaumbildung aufzusaugen.

9. Vorrichtung nach einem der Ansprüche 6 bis 8, weiterhin enthaltend Markierungsmittel, Mittel (48) für Ultraschall-Heften und Mittel (64), um die Befestiger-Einrichtung in vorbestimmte getrennte Abschnitte zu zerschneiden.

10. Verfahren zur Herstellung eines Schaum-Gegenstands, welcher eine Befestiger-Einrichtung einschließt, wobei der Schaum-Gegenstand abtrennbar an anderen Gegenständen angebracht werden kann, wobei die auftrennbare Befestiger-Einrichtung ein abtrennbares Befestigerelement (16) in der Art enthält, daß es auf einer Oberfläche aufrecht stehende Elemente vom Haken-Typ oder Ösen-Typ, ein im Eingriff mit der Oberfläche gegenüber den Haken-Elementen angeordnetes und an dem Befestigerelement angebrachtes Trägerelement (18) und einen zwischen das Befestigerelement und das Trägerelement eingelegten Metallstreifen (20) aufweist, wobei das Verfahren einschließt:

(a) Plazierung und Fixierung der Befestiger-Einrichtung in einer Form für den Schaum-Gegenstand, wobei das Trägerelement so der Form gegenübersteht, daß in der Form angebrachte magnetische Mittel (70) bedeckt werden, wobei der Metallstreifen (20) durch die magnetischen Mittel angezogen wird,

(b) Einleitung von flüssigem schaumbildenden Material in die Form,

(c) das schaumbildende Material wird dazu veranlaßt, zumindest das Trägerelement (18) zu umgeben, und

(d) dem Schaumbildenden Material wird erlaubt, sich so zu setzen, daß die auftrennbare Befestiger-Einrichtung in dem resultierenden Schaum-Gegenstand eingebettet ist,

dadurch gekennzeichnet, daß das Trägerelement (18) ein Basiselement mit einer Vielzahl von aufrecht stehenden einfädigen ösen-ähnlichen Elementen (30) ist und fähig ist, von dem Schaummaterial eingeschlossen zu werden, im Schritt (a) sind die ösen-ähnlichen Elemente (30) an eine Oberfläche der Form angrenzend angeordnet, und im Schritt (c) wird dem schaumbildenden Material erlaubt, unter die ösen-ähnlichen Elemente (30) zu fließen, so daß letztere im Schaum eingeschlossen werden, um die Befestiger-Einrichtung fest und sicher an dem Schaumgegenstand zu befestigen.

11. Verfahren nach Anspruch 10, einschließlich der weiteren Anwendungsschritte, wobei sich vor Schritt (a) ein dünner Film über der Befestiger-Einrichtung befindet, wodurch zumindest die befestigenden Teile des Befestigerelements (16) verdeckt werden.

12. Erzeugnis, welches einen ersten Gegenstand und einen abtrennbaren zweiten Gegenstand aufweist, welche aneinander festgemacht sind durch eine auftrennbare Befestiger-Einrichtung nach einem der Patentansprüche 1 bis 5, wobei der erste Gegenstand ein Schaumkörper ist mit der darin eingebetteten Befestiger-Einrichtung, wobei die Eingriffs-Elemente auf einer Oberfläche (32) aufrecht stehen, welche auf der Außenseite des Schaumkörpers freiliegt, und wobei der zweite Gegenstand (72) einen Träger aufweist, welcher zu einem abtrennbaren Eingriff mit den Eingriffselementen fähig ist, dadurch gekennzeichnet, daß der zweite Gegenstand (72) ein Textil-Überdeckungsmittel ist und daß die ösen-ähnlichen Elemente (30) der Befestiger-Einrichtung in einer im wesentlichen lückenlosen Weise innerhalb des Schaums des Schaumkörpers eingeschlossen sind.

## Revendications

1. Ensemble de fermeture séparable du type à crochets ou boucles, comprenant:

un élément (16) de fermeture séparable comportant une pluralité d'éléments d'accrochage du type crochet ou du type boucle, dressés à partir de l'une (32) des surfaces,

et un élément servant de substrat positionné de manière à être en prise avec la surface située à l'opposé desdits éléments d'accrochage et fixé audit élément de fermeture, caractérisé en ce que ledit élément servant de substrat est un élément de base (18) comportant une pluralité d'éléments monofilament (30) du type boucle, dressés à partir de la surface située du côté opposé à celui de la surface à laquelle est fixé l'élément de fermeture séparable, lesdits éléments multifilaments (30) du type boucle étant aptes à être encastrés au moyen de matériau de mousse formé à partir de composants liquides destinés à la formation de la mousse.

2. Ensemble de fermeture séparable selon la revendication 1, comprenant en outre une bande métallique (20) interposée entre ledit élément (16) de fermeture, et ledit élément (18) servant de substrat, et une pellicule fine (60) qui recouvre la surface dudit élément de fermeture séparable et qui est fixée aud deux bords latéraux (56) de celui-ci en vue de recouvrir ladite surface (32).

3. Ensemble de fermeture séparable selon la revendication 2 dans lequel ledit élément (16) de fermeture séparable est un élément du type crochet moulé en matière plastique.

4. Ensemble de fermeture séparable selon la revendication 3, dans lequel ledit élément (18) servant de substrat est fixé audit élément (16) de fermeture séparable au moyen d'une couture aux ultrasons continue.

5. Ensemble de fermeture séparable selon la revendication 4 dans lequel ledit élément (18) servant de substrat est réalisé en un matériau qui absorbe les liquides.

6. Appareil destiné à adapter un élément (16) de fermeture séparable du type comportant une pluralité d'éléments d'accrochage du type crochet et du type boucle dressés à partir d'une des surfaces et comprenant:

a) des moyens destinés à supporter de manière mobile, un élément (18) formant substrat, ledit élément formant substrat étant un élément de base comportant une pluralité d'éléments (30) du type boucle en monofilament dressés, aptes à être encastrés au moyen d'un matériau de mousse formé à partir de composants liquides destinés à la formation de mousse,

b) des moyens destinés à supporter de manière mobile et à positionner ledit élément (16) de fermeture séparable, de manière telle que le côté opposé au côté comportant la pluralité d'éléments d'accrochage est en contact face-à-face continu avec ledit élément (18) formant substrat, et

c) des moyens destinés à supporter de manière mobile et à positionner une bande métallique (20), de manière telle que la bande métallique est interposée entre ledit élément (18) formant substrat et ledit élément (16) de fermeture séparable, caractérisé par des moyens (22) destinés à fixer aux ultrasons de façon continue ledit élément formant substrat, et ledit élément de fermeture séparable en interposant entre eux ladite bande métallique.

7. Appareil selon la revendication 6, comprenant en outre

a) des moyens destinés à supporter de manière mobile et à positionner une bande de pellicule fine (60), de manière telle que le côté dudit élément (16) de fermeture comportant lesdits éléments d'accrochage est en contact face-à-face continu avec ladite film mince, et

b) des moyens destinés à fixer de manière continue ladite bande (60) de pellicule mince sur au moins un desdits éléments (16) de fermeture et sur ledit élément (18) de substrat.

8. Appareil selon la revendication 6 ou la revendication 7, dans lequel l'élément (18) de substrat est réalisé en un matériau qui absorbe les liquides, apte à absorber des composants liquides de formation de mousse, avant la formation de la mousse.

9. Appareil selon l'une quelconque des revendications 6 à 8, comprenant en outre des moyens de marquage, des moyens (48) de fixation aux ultrasons et des moyens (64) destinés à découper l'ensemble de fermeture en longueurs prédéterminées séparées.

10. Procédé de fabrication d'un article en mousse incorporant un ensemble de fermeture, dans lequel l'article en mousse peut être fixé séparément à un autre article, dans lequel ledit ensemble de fermeture séparable comprend un élément de fermeture séparable du genre comportant des éléments du type crochet ou des éléments du type boucle dressés à partir d'une des surfaces, un élément (18) de substrat positionné en prise avec la surface située du côté opposé aux éléments d'accrochage et fixé audit élément de fermeture, et

une bande de métal (20) interposée entre ledit élément de fermeture et ledit élément de substrat, le procédé comprenant:

(a) le placement et la fixation de l'ensemble de fermeture dans un moule destiné à l'article en mousse, l'élément de substrat étant dirigé vers l'intérieur du moule de façon telle qu'il recouvre des moyens d'aimant (70) mis en place dans le moule, la bande métallique (20) étant attirée par les moyens d'aimant,

(b) l'introduction dans le moule du matériau liquide de formation de mousse,

(c) le fait de faire entourer par le matériau de formation de mousse au moins l'élément (18) de substrat

(d) le fait de permettre au matériau de formation de mousse de se placer de façon telle que l'ensemble de fermeture séparable se trouve encastré dans l'article en mousse qui en résulte;

caractérisé en ce que l'élément (18) de substrat étant un élément de base comportant une pluralité d'éléments en monofilaments dressés du genre boucle aptes à être emprisonnés par ledit matériau de mousse, lesdits éléments (30) du genre boucle sont placés lors de l'opération (a) à proximité de la surface du moule, et que, lors de l'opération (c) le matériau de formation de mousse est autorisé à s'écouler parmi les éléments (30) du genre boucle, de façon telle que ces derniers soient emprisonnés dans la mousse pour fixer solidement l'ensemble de fermeture à l'article en mousse.

11. Procédé selon la revendication 10 comprenant une opération supplémentaire consistant à appliquer, avant l'opération (a), une fine pellicule au-dessus de l'ensemble de fermeture en recouvrant de ce fait au moins lesdits éléments de fixation dudit élément (16) de fermeture.

12. Produit comprenant un premier article et un second article fixés ensemble au moyen d'une fermeture séparable selon l'une quelconque des revendications 1 à 5, le premier article étant un corps de mousse qui comporte l'ensemble de fermeture qui y est encastré, les éléments d'accrochage étant dressés à partir de ladite (32) des surfaces qui est exposée vers l'extérieur du corps de mousse, le second article (72) ayant un envers apte à se mettre en prise de manière séparable avec lesdits éléments d'accrochage, caractérisé en ce que le second article (72) est un moyen de recouvrement en tissu, les éléments (30) du genre boucle de l'ensemble de fermeture étant emprisonnés, sans qu'il y ait de vides sensibles dans la mousse du corps en mousse.

FIG. 1

EP 0 205 489 B1

FIG. 3

FIG. 2

FIG. 4

FIG. 4A

FIG. 4B

FIG. 4C

FIG. 5

FIG. 6

FIG. 7

EP 0 205 489 B1

FIG.8

72

16

16

9

9

FIG.9

18

20

30

72

16

EP 0 205 489 B1